# FASCICULE DE BREVET EUROPEEN

(11) **EP 4 139 196 B1**
(45) Date de publication et mention de la délivrance du brevet: **29.05.2024**
(21) Numéro de dépôt: 21718875.4
(22) Date de dépôt: 14.04.2021
(51) Int. Cl.: B62K 5/10, B62K 25/20, B62K 25/28, B62K 25/30

(54) **VÉLO À DEUX ROUES MOTRICES INDÉPENDANTES**
FAHRRAD MIT ZWEI UNABHÄNGIGEN ANTRIEBSRÄDERN
BICYCLE WITH TWO INDEPENDENT DRIVE WHEELS

(43) Date de publication de la demande: 01.03.2023
(73) Titulaire: Blackbike Ltd., Valletta, VLT 1171 (MT)
(72) Inventeur: POGGI, Paul, 20250 CORTE (FR)
(74) Mandataire: Cornuejols, Marine Sophie
(86) Numéro de dépôt international: PCT/EP2021/059693
(87) Numéro de publication internationale: WO 2021/209515

(56) Documents cités:
- WO-A1-2005/066015
- DE-U1- 20 003 301
- JP-A- 2013 141 940
- KR-A- 20100 036 571

## Description

### Domaine technique de l'invention

La présente invention vise un vélo à deux roues motrices indépendantes. Elle s'applique, notamment, au domaine des transports personnels avec ou sans assistance électrique.

### État de la technique

Les vélos actuellement connus sont soit de type bicyclette soit de type tricycles ou quadricycles. Les bicyclettes présentent de nombreux inconvénients, notamment en ville. En effet, elles glissent facilement sur les zones glissantes, par exemple les taches d'huile, les pavés mouillés ou les bandes de signalisation mouillées. Les tricycles ou quadricycles, plus stables, présentent un encombrement latéral trop important pour leur permettre de se faufiler entre les voies ou de se croiser sur les pistes cyclables, dont on rappelle que la largeur est de 1,3 mètres.

On connaît le document WO 2005/066015, dans lequel un train différentiel est prévu pour compenser les différences de vitesses angulaires entre les roues arrière, comme le montrent les figures 2, 3 et 4. Le vélo décrit dans ce document est donc, à la fois, complexe, lourd, fragile et de fabrication onéreuse.

### Exposé de l'invention

La présente invention vise à remédier à tout ou partie de ces inconvénients.

À cet effet, la présente invention vise un vélo comportant un cadre muni d'une roue avant orientée par un guidon, d'une selle, d'un pédalier, et deux montants arrière pivotants qui portent, chacun, une roue arrière qui s'incline avec le cadre du vélo, les montants arrière pivotants étant montés par des liaisons pivots indépendantes sur le cadre, le pédalier actionnant deux moyens d'entraînement indépendants des roues arrière, le moyen d'entraînement de chaque roue arrière comportant une roue libre, les moyens d'entraînement étant configurés pour que, dans un virage, seule la roue arrière se trouvant du côté de l'intérieur du virage soit entraînée par le pédalier, la roue arrière se trouvant du côté de l'extérieur du virage étant en roue libre et n'étant pas entraînée par le pédalier.

Grâce à ces dispositions, les roues arrière sont indépendantes l'une de l'autre, tant en ce qui concerne le décalage de leurs axes de rotation parallèlement au cadre du vélo qu'en ce qui concerne leur vitesse de rotation. Le vélo objet de l'invention peut ainsi s'incliner dans les virages et disposer d'une adhérence accrue de ses roues arrière. De plus, la présence de deux roues arrière augmente la sécurité du cycliste en réduisant le risque qu'un autre véhicule percute l'une de ses jambes ou l'un de ses pieds.

Du fait que seule la roue arrière du côté intérieur du virage est entraînée, il n'y a pas d'effort mécanique lié à la différence de vitesses de rotation entre les roues arrières. De plus, du fait que la roue arrière du côté intérieur du virage est la seule motrice sous l'action du pédalier, la force exercée par le sol sur cette roue arrière sous l'action du pédalier participe au redressement du vélo dans le virage. L'angle d'inclinaison du vélo est donc plus faible et il y a donc moins de risque de chute.

Enfin, le vélo objet de l'invention présente un poids très faible, une faible complexité, un coût de fabrication réduit et une fiabilité accrue puisqu'aucun train différentiel n'est nécessaire pour compenser les différences de vitesses de rotation des roues arrières dans les virages.

Dans des modes de réalisation, le vélo objet de l'invention comporte un moyen de blocage des liaisons pivots des montants arrière pivotants.

Grâce à ces dispositions, lorsque le moyen de blocage des liaisons pivots est activé, par exemple lorsque le vélo roule à faible vitesse, le vélo est en appui stable sur ses trois roues.

Dans des modes de réalisation, le moyen de blocage des liaisons pivots est configuré pour bloquer la position relative des montants arrière pivotants.

Grâce à ces dispositions, même si le sol est incliné, le vélo est stable sur ses trois roues lorsque le moyen de blocage est activé.

Dans des modes de réalisation, le vélo objet de l'invention comporte un moyen d'inhibition du moyen de blocage des liaisons pivots et un moyen de commande du moyen d'inhibition en fonction de la vitesse du vélo.

Grâce à ces dispositions, lorsque le vélo gagne de la vitesse, les liaisons pivots sont libres, ce qui permet au vélo de s'incliner dans les virages. En revanche, à faible vitesse ou à l'arrêt, le vélo est stable sur ses trois roues. Le cycliste peut donc garder ses pieds sur le pédalier lorsque le vélo est à l'arrêt.

Dans des modes de réalisation, le moyen de commande du moyen d'inhibition comporte un accéléromètre.

L'accéléromètre commande l'inhibition du moyen de blocage dès que la direction d'accélération du centre de gravité du vélo et du cycliste sort du triangle formé par les points de contact des roues sur le sol, c'est-à-dire dès que le vélo est instable. Ainsi, si le sol n'est pas à pente constante ou lorsque le vélo entre dans un virage, le déblocage de la position relative des montants arrière pivotants permet au cycliste de rééquilibrer le vélo. On note que l'accéléromètre peut être électronique, de type connu dans les ordiphones (en anglais « smartphones ») ou mécanique, de type connu dans les flippers, à balancier amorti et contact électrique du balancier au-delà d'un certain angle d'inclinaison.

Dans des modes de réalisation, les moyens d'entraînement des roues arrière comportent, chacun, une chaîne montée entre un plateau du pédalier et au moins un pignon solidaire d'une roue arrière, chaque chaîne enjambant un montant arrière pivotant, chaque montant arrière pivotant supportant l'arbre d'une roue arrière entre chaque dit pignon et ladite roue arrière.

Grâce à ces dispositions, les efforts sur les montants arrière pivotants sont réduits.

Dans des modes de réalisation, chaque montant arrière pivotant présente une forme en demi-sinusoïde entre deux sommets de sinusoïde.

Dans des modes de réalisation, le vélo objet de l'invention comporte, entre le cadre et l'arbre de chaque roue arrière, un amortisseur arrière en appui sur l'arbre de la roue arrière au même niveau que le montant arrière pivotant portant ladite roue arrière.

Grâce à ces dispositions, on augmente le confort du cycliste et on réduit les efforts sur les montants arrière pivotants.

Dans des modes de réalisation, l'écartement entre les roues arrière est inférieur à 31 centimètres.

Le vélo objet de l'invention peut ainsi se faufiler entre les files de voitures.

Dans des modes de réalisation, le vélo objet de l'invention comporte une motorisation des roues arrière.

La motorisation, notamment, électrique peut, selon les variantes, entraîner le pédalier ou directement chacune des roues arrière ou la roue avant.

Dans des modes de réalisation, la motorisation comporte deux moteurs, chacun intégré à une roue arrière. Ainsi, la force exercée par chacune des roues arrières sur le sol peut être modulée, par exemple, en fonction de l'équilibre du vélo.

Dans des modes de réalisation, le vélo comporte un module de commande de la puissance exercée par chacun des dits moteurs sur chacune des roues arrières.

Dans des modes de réalisation, la roue avant comporte un moteur qui l'actionne, le module de commande commandant, de plus, la puissance exercée par le moteur de la roue avant.

Dans des modes de réalisation, le vélo qui comporte une motorisation de l'orientation du guidon, le module de commande commandant, de plus, le moteur d'orientation du guidon.

Dans des modes de réalisation, le module de commande de la puissance exercée par chacun des dits moteurs est relié à un capteur d'angle du cadre par rapport à la verticale, à un capteur de vitesse du vélo et à un capteur de position angulaire du guidon, le module de commande étant configuré pour que la puissance exercée par chaque moteur intégré à une roue engendre un différentiel des forces exercées par le sol sur le vélo, ce différentiel correspondant à un moment de ces forces par rapport au centre de gravité du vélo et du cycliste, en fonction de la vitesse, de la position angulaire du guidon et de l'inclinaison du vélo.

Grâce à ces dispositions, le module de commande peut compenser de légères instabilités du vélo.

Dans des modes de réalisation, le module de commande est configuré pour assurer une courbe de virage progressive et une bonne stabilité du vélo.

Dans des modes de réalisation, le module de commande est configuré pour assurer la stabilité du vélo, en ligne droite comme en courbe, en corrigeant de légères inclinaisons du vélo par commande de forces exercées par le sol sur les roues en réponses aux forces exercées par les moteurs.

Dans des modes de réalisation, le module de commande met en oeuvre une fonction reliant les valeurs de vitesse, de position angulaire du guidon, l'inclinaison du vélo aux forces exercées par les moteurs, fonction déterminée par apprentissage automatique.

Dans des modes de réalisation, l'apprentissage automatique est réalisé avec des cyclistes sachant faire du vélo et des cyclistes en apprentissage, l'inclinaison brutale du vélo correspondant à un échec et une longue durée sans inclinaison brutale correspondant à un succès.

Dans des modes de réalisation, l'apprentissage automatique se poursuit avec l'utilisateur du vélo.

### Brève description des figures

D'autres avantages, buts et caractéristiques particulières de l'invention ressortiront de la description non limitative qui suit d'au moins un mode de réalisation particulier du vélo objet de la présente invention, en regard des dessins annexés, dans lesquels :
[Fig 1] représente, en vue de dessus, un mode de réalisation particulier du vélo objet de l'invention,
[Fig 2] représente, en vue de côté, le vélo illustré en figure 1,
[Fig 3] représente en perspective partielle, le vélo illustré en figures 1 et 2,
[Fig 4] représente, de dos, une vue partielle du vélo illustré en figures 1 à 3, en configuration de roulage en ligne droite,
[Fig 5] représente, de dos, une vue partielle du vélo illustré en figures 1 à 3, en configuration de roulage en virage vers la gauche,
[Fig 6] représente, en coupe verticale, un moyen de blocage des positions relatives de liaisons pivots et
[Fig 7] représente, en coupe horizontale, le moyen de blocage illustré en figure 6.

### Description des modes de réalisation

La présente description est donnée à titre non limitatif, chaque caractéristique d'un mode de réalisation pouvant être combinée à toute autre caractéristique de tout autre mode de réalisation de manière avantageuse.

On note, dès à présent, que les figures sont, chacune, à l'échelle mais, qu'entre elles, les échelles peuvent varier.

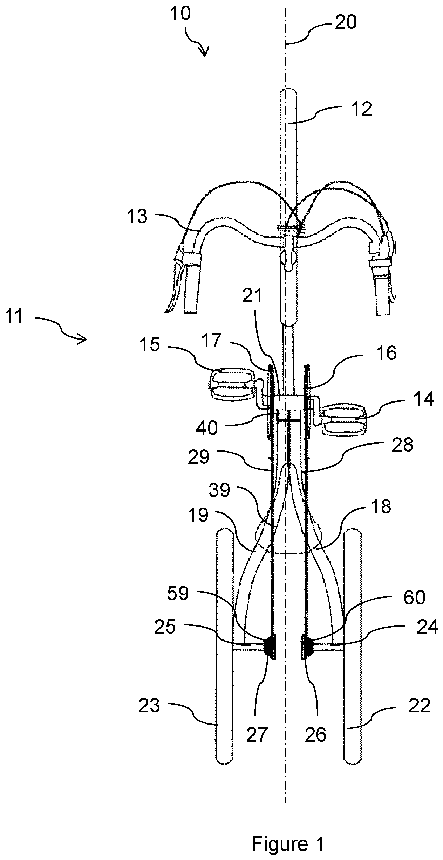

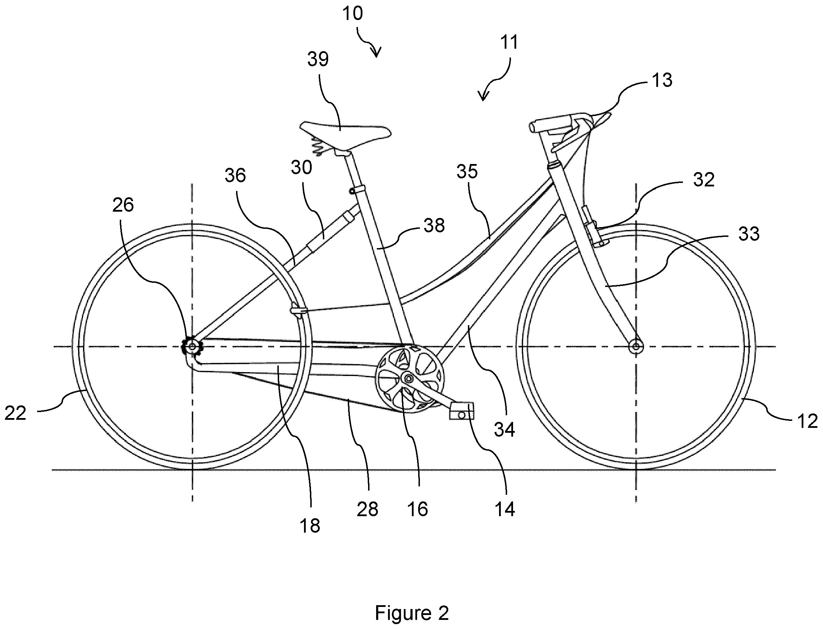

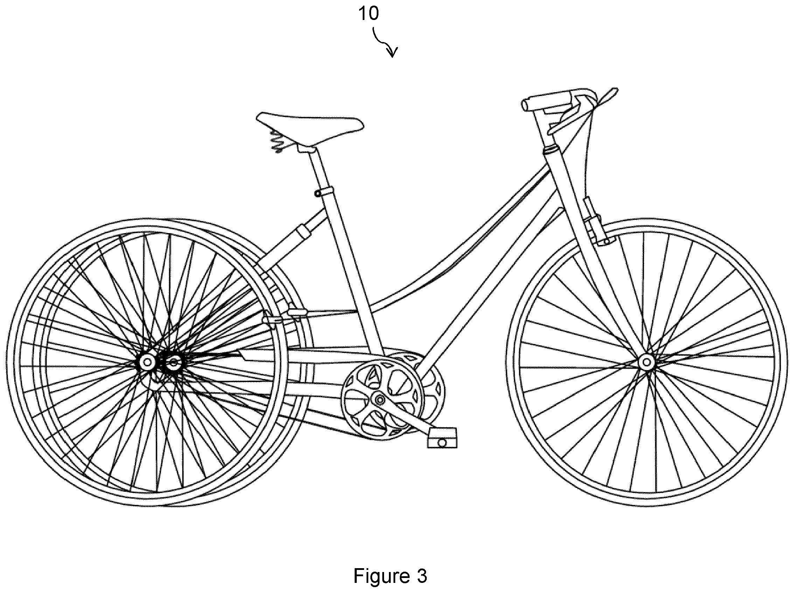

Dans toute la description, on appelle « inférieur » ce qui est en bas dans la configuration normale d'utilisation du vélo objet de l'invention et vers le bas dans les figures 2 à 5, et « supérieur » ce qui en haut dans les figures 2 à 5. On appelle « avant » ou « face » ce qui est proche ou orienté vers l'avant du vélo, en haut en figure 1, et « arrière » ou « de dos » ce qui est proche ou orienté vers l'arrière du vélo, en bas en figure 1. De même, on appelle « interne », ce qui se trouve proche ou orienté vers un plan de symétrie globale 20 du vélo et « externe », ce qui se trouve éloigné ou orienté à l'opposé de ce plan de symétrie 20.

Dans toute la description, pour des raisons de clarté des figures, on a omis d'y représenter des garde-boues, des éclairages, un catadioptre, un rétroviseur, un avertisseur sonore, un amortisseur avant, un antivol, un porte-bagage, des dérailleurs synchronisés, un levier de choix de rapport de démultiplication, et des protège-chaînes qui peuvent être incorporés au vélo objet de l'invention.

On observe, en figures 1 à 5, un vélo 10 objet de l'invention présentant un plan de symétrie globale 20. Le vélo 10 comporte un cadre 11 muni d'une roue avant 12 orientée par un guidon 13, d'une selle 39 et d'un pédalier 14, 15. Le cadre 11 comporte, comme illustré en figure 2, une fourche avant 33 reliant le guidon 13 à l'arbre de la roue avant 12 et portant un frein 32. Le cadre 11 comporte aussi un montant avant oblique 34 reliant un boîtier (non représenté) de roulements entourant la fourche avant 33 à un boîtier de roulements 21 du pédalier. Le cadre comporte encore un montant oblique 38 reliant le boîtier de roulements 21 à la selle 39 et un montant oblique central 35 reliant le boîtier (non représenté) de roulements de la fourche avant 33 à une partie intermédiaire du montant 38.

Le pédalier 14, 15 actionne des moyens d'entraînement indépendants des roues arrière 23 et 22, ces moyens d'entraînement étant munis de roues libres (non représentées.

Ainsi, le vélo 10 comporte un cadre 11 muni d'une roue avant 12 orientée par un guidon 13, d'une selle 39 et d'un pédalier 14 et 15. Ce cadre 11 est relié à deux montants arrière pivotants 18 et 19 portant, chacun, une roue arrière 22 et 23, respectivement, qui s'incline avec le cadre 11 du vélo 10. Les montants arrière pivotants 18 et 19 sont montés, par des liaisons pivots 40, 56 et 57 indépendantes sur le cadre 11. Le pédalier 14 et 15 actionne deux moyens 16, 17, 26, 27, 28, 29, 59 et 60 d'entraînement indépendants des roues arrières. Le moyen d'entraînement de chaque roue arrière comportant une roue libre 59 et 60. Les moyens d'entraînement sont configurés pour que, dans un virage, seule la roue arrière se trouvant du côté de l'intérieur du virage soit entraînée par le pédalier, la roue arrière se trouvant du côté de l'extérieur du virage étant en roue libre et n'étant pas entraînée par le pédalier.

Dans des modes de réalisation (non représentés), un cardan ou une transmission a courroie est mis en oeuvre pour transmettre la rotation du pédalier aux roues arrière.

Dans le mode de réalisation représenté dans les figures 1 à 5, les moyens d'entraînement des roues arrière 23 et 22 par le pédalier 14, 15 comportent, chacun, une chaîne montée entre un plateau du pédalier et au moins un pignon solidaire d'une roue arrière. Le pédalier comporte une pédale droite 14, une pédale gauche 15, un plateau droit 16, un plateau gauche 17 et un arbre (non représenté) dans le boîtier de roulements 21. Le plateau droit 16 entraîne une chaîne droite 28 qui entraîne un pignon droit 26. Le plateau gauche 17 entraîne une chaine gauche 29 qui entraîne un pignon gauche 27. Par le biais de dérailleurs synchronisés (non représentés), le cycliste effectue le choix des pignons droit 26 et gauche 27 parmi deux pluralités de pignons présentant des nombres de dents différents. Par l'intermédiaire d'une roue libre 59, le pignon gauche 27 entraîne la roue arrière gauche 23. Par l'intermédiaire d'une roue libre 60, le pignon droit 26 entraîne la roue arrière droite 22.

Un boîtier de roulements (non représenté) de l'arbre gauche 25 de la roue gauche 23 est relié au cadre 11 par un montant arrière pivotant 19 relié, en liaison pivot, au boîtier de roulements 21. Un boîtier de roulements (non représenté) de l'arbre droit 24 de la roue droite 22 est relié au cadre 11 par un montant arrière pivotant 18 relié, en liaison pivot, au boîtier de roulements 21. Les axes des liaisons pivots sont parallèle à l'axe de rotation du pédalier dans le boîtier de roulements 21.

Dans des modes de réalisation préférentiels, tels que celui illustré dans les figures, un montant oblique arrière gauche 37 muni d'un amortisseur 31 à vérin pneumatique relie le montant oblique 38 à proximité de la selle 39 à un boîtier de roulements gauche de l'arbre gauche 25. Dans ces modes de réalisation, un montant oblique arrière droit 36 muni d'un amortisseur 30 à vérin pneumatique relie le montant oblique 38 à proximité de la selle 39 à un boîtier de roulements droit de l'arbre droit 24.

Préférentiellement, la liaison du montant oblique arrière gauche 37 est solidaire du boîtier de roulements gauche au même niveau, c'est-à-dire à la même distance du plan 20, que la liaison du montant arrière pivotant gauche 19 à ce boîtier de roulements gauche. Similairement, la liaison du montant oblique arrière droit 36 est solidaire du boîtier de roulements droit au même niveau, c'est-à-dire à la même distance du plan 20, que la liaison du montant arrière pivotant droit 18 à ce boîtier de roulements droit.

Dans des modes de réalisation, les montants 37 et 36, ainsi que les amortisseurs qu'ils portent, sont remplacés par des amortisseurs intégrés aux liaisons pivots des montants arrière pivotants 18 et 19 ou se trouvant à proximité de ces liaisons pivots.

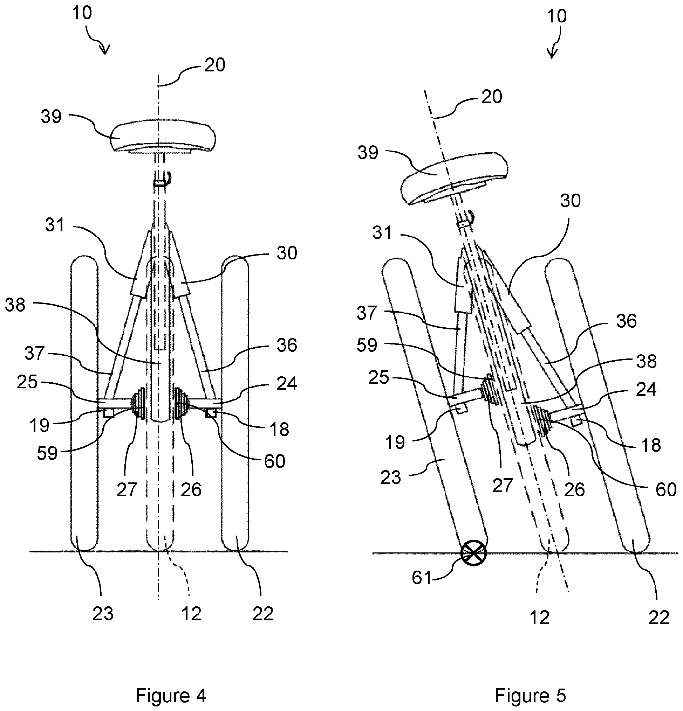

Comme on le comprend à la lecture de la description qui précède, les roues arrière 23 et 22 sont indépendantes l'une de l'autre, tant dans le décalage de leurs axes de rotation, du fait des liaisons pivots des montants arrière pivotants 18 et 19, que dans leur vitesse de rotation, du fait de leurs entraînements indépendants. Comme illustré en figure 5, le vélo 10 objet de l'invention peut ainsi s'incliner dans les virages et disposer d'une adhérence accrue de ses roues arrière 23 et 22. De plus, la présence de deux roues arrière 23 et 22 augmente la sécurité du cycliste en réduisant le risque qu'un autre véhicule percute l'une de ses jambes ou l'un de ses pieds.

Du fait que seule la roue arrière 23 du côté intérieur du virage est entraînée, il n'y a pas d'effort mécanique lié à la différence de vitesses de rotation entre la roue arrière 22, qui tourne plus vite puisqu'elle parcourt un arc de cercle de plus grande rayon et se trouve donc en roue libre, et la roue arrière 23 qui est la seule entraînée par le pédalier 14 et 15. De plus, du fait que la roue arrière 23 du côté intérieur du virage est la seule motrice sous l'action du pédalier 14 et 15, la force 61 (figure 5) exercée par le sol sur cette roue arrière 23 (en réaction à la force exercée par la roue 23 sur le sol sous l'action du pédalier 14 et 15) participe au redressement du vélo 10 dans le virage. L'angle d'inclinaison du vélo est donc plus faible qu'avec une bicyclette et il y a donc moins de risque de chute.

On note que le vélo 10 présente, du fait de la simplicité de ses moyens d'entraînement des roues arrières 22 et 23, un poids très faible, un coût de fabrication réduit et une fiabilité accrue puisqu'aucun train différentiel n'est mis en oeuvre pour compenser les différences de vitesses de rotation des roues arrières 22 et 23 dans les virages.

Dans le mode de réalisation représenté dans les figures :
- chaque chaîne 28 et 29 enjambe un montant arrière pivotant, respectivement 18 et 19 et
- chaque montant arrière pivotant 18 et 19 supporte l'arbre 24 et 25 d'une roue arrière 22 et 23 entre chaque dit pignon 26 et 27 et ladite roue arrière 22 et 23, respectivement.

En d'autres termes, les montants arrière pivotants 18 et 19 sont plus proches que les plateaux 16 et 17 du plan de symétrie 20 au niveau du pédalier et les montants arrière pivotants 18 et 19 sont plus éloignés que les pignons 26 et 27 du plan de symétrie 20 au niveau de ces pignons. Préférentiellement, chaque montant arrière pivotant 18 et 19 présente une forme en demi-sinusoïde entre deux sommets de sinusoïde, c'est-à-dire une demi-sinusoïde dont les extrémités sont parallèles. Cette forme à l'avantage de permettre aux plateaux 16 et 17 et donc aux pédales 14 et 15 d'être proches l'un de l'autre.

Préférentiellement, l'écartement entre les roues arrière 22 et 23 est inférieur à 31 centimètres, par exemple 20 centimètres. Le vélo 10 peut ainsi se faufiler entre les files de voitures.

Dans des modes de réalisation (non représentés) le vélo objet de l'invention comporte une motorisation d'assistance électrique ou autonome, c'est-à-dire propulsant le vélo même si le cycliste n'actionne pas le pédalier, et une batterie, par exemple positionnée entre les roues arrière. Selon les variantes, la motorisation d'assistance électrique entraîne le pédalier ou directement chacune des roues arrière ou la roue avant.

Dans une première variante, la motorisation entraîne le pédalier, si bien que, dans les virages, elle n'entraîne que la roue arrière du côté intérieur du virage (la roue 23 en figure 5).

Dans une deuxième variante, la motorisation comporte deux moteurs, chacun intégré à une roue arrière. Dans ce cas, un module de commande de puissance exercée par chacun des moteurs peut être programmé selon l'un, au moins, des trois modes de fonctionnement suivants :
- la puissance motrice n'est exercée que sur la roue arrière du côté intérieur du virage,
- la puissance motrice n'est exercée que sur la roue arrière du côté extérieur du virage ou
- la puissance motrice est répartie entre les deux roues arrières.

Dans des modes de réalisation dans lesquels la motorisation comporte deux moteurs, chacun intégré à une roue arrière, le module de commande de la puissance exercée par chacun des moteurs est relié à un capteur d'angle du cadre par rapport à la verticale, à un capteur de vitesse du vélo et à un capteur de position angulaire du guidon. La puissance exercée par chaque moteur intégré à une roue arrière peut alors être commandée pour engendrer un différentiel des forces exercées par le sol sur les roues arrières, ce différentiel correspondant à un moment de ces forces par rapport au centre de gravité du vélo et du cycliste. Le module de commande commande alors ce différentiel de forces en fonction de la force centrifuge (déterminée en fonction de la vitesse et de la position angulaire du guidon) et de l'inclinaison du vélo (déterminée par le capteur de verticalité). Le module de commande peut ainsi aider à assurer une courbe de virage progressive et une bonne stabilité du vélo.

Dans des modes de réalisation, pour augmenter le moment des forces exercées par les roues sur le sol, la roue avant comporte aussi un moteur qui actionne le module de commande commandant, de plus, la puissance exercée par le moteur de la roue avant. Dans des modes de réalisation, qui peuvent se combiner avec les précédents, pour augmenter la capacité de stabilisation du vélo par le module de commande, le vélo comporte aussi une motorisation de l'orientation du guidon. Ainsi, la trajectoire même du vélo est partiellement déterminée par le module de commande. Le moment de la force exercée par la motorisation du guidon est suffisamment faible pour que l'utilisateur puisse s'y opposer et imposer l'amorce d'un virage, le module de commande commandant alors l'équilibrage du vélo dans le virage.

Dans des modes de réalisation, le module de commande assure la stabilité du vélo, en ligne droite comme en courbe, en corrigeant de légères inclinaisons du vélo par commande des forces exercées par les moteurs. La fonction reliant les valeurs de vitesse, de position angulaire du guidon, l'inclinaison du vélo aux commandes des moteurs peut être déterminée par des calculs théoriques ou, préférentiellement, par apprentissage automatique réalisé avec des cyclistes sachant faire du vélo et/ou des cyclistes en apprentissage, selon des techniques d'apprentissage connues, l'inclinaison brutale, par exemple une variation d'au moins dix degrés en moins d'une seconde, correspondant à une chute où à un pied mis à terre par le cycliste, étant, en termes d'apprentissage automatique, un échec. A l'inverse une longue durée, par exemple au moins dix secondes, sans cette inclinaison brutale est, en termes d'apprentissage automatique, un succès. L'apprentissage automatique mène ainsi progressivement à une fonction de stabilité automatique. Préférentiellement, cet apprentissage automatique se poursuit avec l'utilisateur (préférentiellement, l'utilisateur habituel) du vélo, du fait que la position du centre de gravité et le poids total du vélo sont variables, en fonction de l'utilisateur, de son habillement et des éventuelles charges annexes, par exemple portées par un porte-bagage.

Dans des modes de réalisation, le vélo objet de l'invention comporte un moyen de blocage des liaisons pivots des montants arrière pivotants 18 et 19. Par exemple, ce moyen de blocage consiste en un blocage des amortisseurs, par exemple les amortisseurs 30 et 32. Selon d'autres exemple, le blocage s'effectue au niveau des liaisons pivots des montants arrière pivotants 18 et 19. Par exemple, chaque liaison pivot est associée à un frein à tambours ou à disques. Ainsi, lorsque le moyen de blocage des liaisons pivots est activé, par exemple lorsque le vélo roule à faible vitesse, le vélo est en appui stable sur ses trois roues.

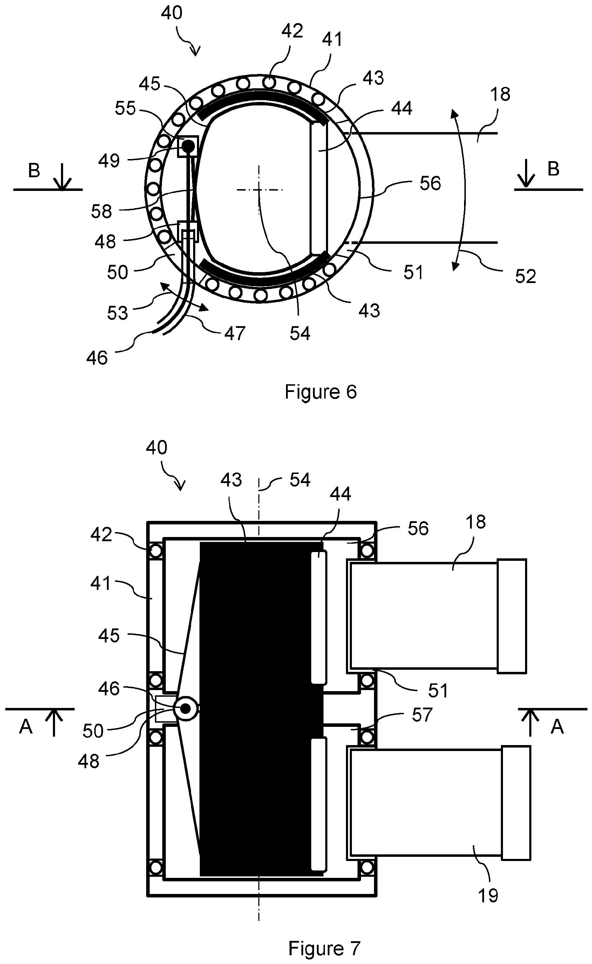

Dans des modes de réalisation, le moyen de blocage des liaisons pivots est configuré pour bloquer la position relative des montants arrière pivotants 18 et 19, tout en leur permettant de pivoter solidairement. Par exemple, ce blocage des positions relatives est réalisé par un système de frein à tambours dont le tambour unique bloque la rotation de chaque liaison pivot par rapport à ce tambour, comme illustré en figure 6.

Ainsi, même si le sol est incliné, le vélo est stable sur ses trois roues 12, 23 et 22 lorsque le moyen de blocage est activé. Ce blocage permet une position parking du vélo avec son plan de symétrie 20 vertical.

On observe, en figures 6 et 7, un moyen de blocage 40. La figure 6 est une coupe verticale A - A (sur le plan de symétrie 20). La figure 7 est une coupe horizontale B - B. On retrouve, en figures 6 et 7, les montants arrière pivotants 18 et 19. Un boîtier à roulements 41 comporte quatre roulements à billes 42 entourant des cylindres 56 et 57 solidaires des montants arrière pivotants 18 et 19. Pour faciliter la lecture de la figure 6, certaines billes 42 ne sont pas représentées.

Ces roulements à billes 42 permettent la rotation selon la flèche 52, en liaison pivot, des montants arrière pivotants 18 et 19 dans le boîtier à roulements 41, autour de l'axe de rotation 54. Une ouverture 51 du boîtier de roulements 40 est plus large que le montant 18 permet le pivotement du montant arrière pivotant 18.

Des patins de freins 43 en troncs de cylindre dont l'axe est l'axe 54 dont portés par une structure souple 45 présentant un croisement 58 de tiges et par une structure rigide 44. Un câble 46 présente une extrémité sphérique 49 retenue dans un logement 55 solidaire d'une extrémité de la structure souple 45. La gaine 47 du câble 46 est retenue dans un logement 48. La gaine 47 peut se déplacer en rotation autour de l'axe 54, selon la flèche 53, grâce à une ouverture 50 du boîtier de roulements 40. Comme on le comprend aisément, lorsque le câble 46 est tiré, manuellement ou par un moteur électrique, les logements 48 et 55 se rapprochent, ce qui provoque grâce au croisement 58 de la structure souple 45, l'écartement des patins 43 et la solidarisation des patins 43 avec le cylindre 56. Puisque les patins 43 sont communs aux deux cylindres 56 et 57, les positions relatives des montants arrière pivotants 18 et 19 sont bloquées par les patins 43.

Dans une variante dans laquelle le moyen de blocage bloque la position de chacun des montants arrière pivotants 18 et 19 par rapport au cadre 11 du vélo, les patins 43 s'étendent jusqu'à un épaulement du boîtier de roulements 40 de manière à se solidariser à ce boîtier de roulements 40.

Dans des modes de réalisation, le vélo 10 comporte un moyen d'inhibition du moyen de blocage des liaisons pivots et un moyen de commande du moyen d'inhibition en fonction de la vitesse du vélo.

Dans des premiers exemples, un accéléromètre commande l'inhibition du moyen de blocage dès que la direction d'accélération du centre de gravité du vélo et du cycliste sort du triangle formé par les points de contact des roues sur le sol, c'est-à-dire dès que le vélo est instable. Ainsi, si le sol n'est pas à pente constante ou lorsque le vélo entre dans un virage, le déblocage de la position relative des montants arrière pivotants 18 et 19 permet au cycliste de rééquilibrer le vélo. On note que l'accéléromètre peut être électronique, de type connu dans les ordiphones (en anglais « smartphones ») ou mécanique, de type connu dans les flippers, à balancier amorti et contact électrique du balancier au-delà d'un certain angle d'inclinaison.

Dans des deuxièmes exemples, complétant ou remplaçant les fonctions des premiers exemples, le moyen de blocage est activé jusqu'à une vitesse prédéterminée et désactivé (inhibé) au-delà de cette vitesse prédéterminée. Par exemple, le moyen de blocage est un frein à actionnement électrique et le moyen de commande de ce frein est relié à un tachymètre mesurant la vitesse du vélo 10. Ainsi, lorsque le vélo 10 gagne de la vitesse, par exemple au-delà d'une vitesse choisie par le cycliste ou le constructeur du vélo 10, par exemple 10 km/h ou 15 km/h, les liaisons pivots des montants arrière pivotants 18 et 19 sont libres, ce qui permet au vélo 10 de s'incliner dans les virages, comme illustré en figure 5. En revanche, à faible vitesse, le vélo 10 est stable sur ses trois roues 12, 23 et 22. On rappelle, à ce propos, qu'un vélo standard qui roule très lentement, est difficile à maîtriser. Le cycliste perd donc beaucoup d'énergie à donner des coups de guidon de droite à gauche pour l'empêcher de tomber. Le vélo objet de l'invention évite cet inconfort et cette perte d'énergie : le cycliste peut imposer son rythme même très lentement sans risque de chute par le blocage des liaisons pivots.

Le cycliste peut aussi garder ses pieds sur les pédales 14 et 15 lorsque le vélo 10 est à l'arrêt.

Ce blocage des liaisons pivots des montants arrière pivotants 18 et 19 facilite aussi l'apprentissage de la conduite d'un vélo.

La commande du blocage, du déblocage et ou de l'inhibition du moyen de blocage peut se faire au guidon, sur l'un des montants 34 ou 35, soit en actionnant mécaniquement le câble 46 avec un moyen connu dans les changements de rapport des vélos de type connu, soit en actionnant, avec un interrupteur, un moteur électrique qui tire ou relâche le câble 46.

## Revendications

1. Vélo (10) comportant un cadre (11) muni d'une roue avant (12) orientée par un guidon (13), d'une selle (39), d'un pédalier (14 et 15), ledit cadre étant relié à deux montants arrière pivotants (18, 19) portant, chacun, une roue arrière (22, 23) qui s'incline avec le cadre du vélo, les montants arrière pivotants étant montés par des liaisons pivots (40, 56, 57) indépendantes sur le cadre, le pédalier actionnant deux moyens d'entraînement (16, 17, 26, 27, 28, 29, 59, 60) indépendants des roues arrières, **caractérisé en ce que** le moyen d'entraînement de chaque roue arrière comporte une roue libre (59, 60), les moyens d'entraînement étant configurés pour que, dans un virage, seule la roue arrière se trouvant du côté de l'intérieur du virage soit entraînée par le pédalier, la roue arrière se trouvant du côté de l'extérieur du virage étant en roue libre et n'étant pas entraînée par le pédalier.

2. Vélo (10) selon la revendication 1, qui comporte, de plus, un moyen de blocage (43, 44, 45, 46, 47, 48, 49, 55, 58) des liaisons pivots (40, 56, 57) des montants arrière pivotants (18, 19).

3. Vélo (10) selon la revendication 2, dans lequel le moyen de blocage (43, 44, 45, 46, 47, 48, 49, 55, 58) des liaisons pivots (40, 56, 57) est configuré pour bloquer la position relative des montants arrière pivotants (18, 19).

4. Vélo (10) selon l'une des revendications 2 ou 3, qui comporte, de plus, un moyen d'inhibition du moyen de blocage (43, 44, 45, 46, 47, 48, 49, 55, 58) des liaisons pivots (40, 56, 57) et un moyen de commande du moyen d'inhibition en fonction de la vitesse du vélo.

5. Vélo (10) selon la revendication 4, dans lequel le moyen de commande du moyen d'inhibition comporte un accéléromètre.

6. Vélo (10) selon l'une des revendications 1 à 5, dans lequel les moyens d'entraînement (16, 17, 26, 27, 28, 29) des roues arrière (22, 23) comportent, chacun, une chaîne (28, 29) montée entre un plateau (16, 17) du pédalier et au moins un pignon (26, 27) solidaire de la roue arrière correspondante, chaque chaîne enjambant le montant arrière pivotant correspondant (18, 19), chaque montant arrière pivotant supportant l'arbre (24, 25) de la roue arrière correspondante entre chaque dit pignon et ladite roue arrière.

7. Vélo (10) selon l'une des revendications 1 à 6, qui comporte, entre le cadre (11) et l'arbre (24, 25) de chaque roue arrière (22, 23), un amortisseur arrière (30, 31) en appui sur l'arbre de la roue arrière au même niveau que le montant arrière pivotant (18, 19) portant ladite roue arrière.

8. Vélo (10) selon l'une des revendications 1 à 7, qui comporte une motorisation des roues arrières (22, 23).

9. Vélo (10) selon la revendication 8, dans lequel la motorisation comporte deux moteurs, chacun intégré à une desdites roues arrières.

10. Vélo (10) selon la revendication 9, qui comporte un module de commande de la puissance exercée par chacun des dits moteurs sur chacune des roues arrières.

11. Vélo (10) selon la revendication 10, dans lequel la roue avant comporte un moteur qui l'actionne, le module de commande commandant, de plus, la puissance exercée par le moteur de la roue avant.

12. Vélo (10) selon l'une des revendications 10 ou 11, qui comporte une motorisation de l'orientation du guidon, le module de commande commandant, de plus, le moteur d'orientation du guidon.

13. Vélo (10) selon l'une des revendications 10 à 12, dans lequel le module de commande de la puissance exercée par chacun des moteurs est relié à un capteur d'angle du cadre par rapport à la verticale, à un capteur de vitesse du vélo et à un capteur de position angulaire du guidon, le module de commande étant configuré pour que la puissance exercée par chaque moteur intégré à une desdites roues engendre un différentiel des forces exercées par le sol sur le vélo, ce différentiel correspondant à un moment de ces forces par rapport au centre de gravité du vélo et du cycliste, en fonction de la vitesse, de la position angulaire du guidon et de l'inclinaison du vélo.

14. Vélo (10) selon la revendication 13 44 , dans lequel le module de commande met en oeuvre une fonction reliant les valeurs de vitesse, de position angulaire du guidon, l'inclinaison du vélo aux commandes de moteurs, fonction déterminée par apprentissage automatique.

15. Vélo (10) selon la revendication 14, dans lequel l'apprentissage automatique est réalisé avec des cyclistes sachant faire du vélo et des cyclistes en apprentissage, l'inclinaison brutale du vélo correspondant à un échec et une longue durée sans inclinaison brutale correspondant à un succès.

## Patentansprüche

1. Fahrrad (10) mit einem Rahmen (11), der mit einem Vorderrad (12) ausgestattet ist, das durch einen Lenker (13), einen Sattel (39), eine Pedalanlage (14 und 15) ausgerichtet ist, wobei der Rahmen mit zwei schwenkbaren Hecksäulen (18, 19) verbunden ist, die jeweils ein Hinterrad (22, 23) tragen, das sich mit dem Fahrradrahmen neigt, wobei die schwenkbaren Hecksäulen durch unabhängige Drehgelenkverbindungen (40, 56, 57) am Rahmen angebracht sind, wobei die Pedalanlage zwei von den Hinterrädern unabhängige Antriebsmittel (16, 17, 26, 27, 28, 29, 59, 60) betätigt, **dadurch gekennzeichnet, dass** das Antriebsmittel jedes Hinterrads einen Freilauf (59, 60) aufweist, wobei die Antriebsmittel so ausgelegt sind, dass in einer Kurve nur das kurveninnere Hinterrad von der Pedalanlage angetrieben wird, wobei das kurvenäußere Hinterrad freilaufend ist und nicht von der Pedalanlage angetrieben wird.

2. Fahrrad (10) nach Anspruch 1, das weiterhin ein Arretiermittel (43, 44, 45, 46, 47, 48, 49, 55, 58) der Drehgelenkverbindungen (40, 56, 57) der schwenkbaren Hecksäulen (18, 19) aufweist.

3. Fahrrad (10) nach Anspruch 2, wobei das Arretiermittel (43, 44, 45, 46, 47, 48, 49, 55, 58) der Drehgelenkverbindungen (40, 56, 57) so ausgelegt ist, dass es die relative Position der schwenkbaren Hecksäulen (18, 19) arretiert.

4. Fahrrad (10) nach einem der Ansprüche 2 oder 3, das weiterhin ein Mittel zur Hemmung des Arretiermittels (43, 44, 45, 46, 47, 48, 49, 55, 58) der Drehgelenkverbindungen (40, 56, 57) und ein Mittel zur Steuerung des Hemmmittels in Abhängigkeit von der Geschwindigkeit des Fahrrads aufweist.

5. Fahrrad (10) nach Anspruch 4, wobei das Steuerungsmittel des Hemmmittels einen Beschleunigungsmesser aufweist.

6. Fahrrad (10) nach einem der Ansprüche 1 bis 5, wobei die Antriebsmittel (16, 17, 26, 27, 28, 29) der Hinterräder (22, 23) jeweils eine Kette (28, 29) aufweisen, die zwischen einer Platte (16, 17) der Pedalanlage und wenigstens einem mit dem entsprechenden Hinterrad fest verbundenen Zahnrad (26, 27) angebracht ist, wobei jede Kette die entsprechende schwenkbare Hecksäule (18, 19) überspannt, wobei jede schwenkbare Hecksäule die Welle (24, 25) des jeweiligen Hinterrads zwischen jedem Zahnrad und dem Hinterrad trägt.

7. Fahrrad (10) nach einem der Ansprüche 1 bis 6, das zwischen dem Rahmen (11) und der Welle (24, 25) jedes Hinterrads (22, 23) einen hinteren Stoßdämpfer (30, 31) aufweist, der auf der Welle des Hinterrads in derselben Höhe aufliegt wie die schwenkbare Hecksäule (18, 19), die das Hinterrad trägt.

8. Fahrrad (10) nach einem der Ansprüche 1 bis 7, das eine Motorisierung der Hinterräder (22, 23) umfasst.

9. Fahrrad (10) nach Anspruch 8, wobei die Motorisierung zwei Motoren aufweist, die jeweils in eines der Hinterräder integriert sind.

10. Fahrrad (10) nach Anspruch 9, das ein Steuerungsmodul für die von jedem der Motoren auf jedes der Hinterräder ausgeübte Leistung umfasst.

11. Fahrrad (10) nach Anspruch 10, wobei das Vorderrad einen Motor aufweist, der es antreibt, wobei das Steuerungsmodul weiterhin die vom Motor des Vorderrads ausgeübte Leistung steuert.

12. Fahrrad (10) nach einem der Ansprüche 10 oder 11, das eine Motorisierung der Lenkerausrichtung umfasst, wobei das Steuerungsmodul weiterhin den Lenkerausrichtungsmotor steuert.

13. Fahrrad (10) nach einem der Ansprüche 10 bis 12, wobei das Modul zur Steuerung der von jedem der Motoren ausgeübten Leistung mit einem Winkelsensor des Rahmens im Verhältnis zur Vertikalen, einem Geschwindigkeitssensor des Fahrrads und einem Winkelsensor des Lenkers verbunden ist, wobei das Steuerungsmodul so ausgelegt ist, dass die von jedem Motor, der in einem der Räder integriert ist, ausgeübte Leistung eine Differenz der vom Boden auf das Fahrrad ausgeübten Kräfte erzeugt, wobei diese Differenz einem Moment dieser Kräfte im Verhältnis zum Schwerpunkt des Fahrrads und des Fahrradfahrers in Abhängigkeit von der Geschwindigkeit, der Winkelposition des Lenkers und der Neigung des Fahrrads entspricht.

14. Fahrrad (10) nach Anspruch 13, wobei das Steuerungsmodul eine Funktion implementiert, die die Werte für Geschwindigkeit, Winkelposition des Lenkers, Neigung des Fahrrads mit den Motorsteuerungen verbindet, wobei die Funktion durch maschinelles Lernen bestimmt wird.

15. Fahrrad (10) nach Anspruch 14, wobei das maschinelle Lernen mit Fahrradfahrern, die Fahrrad fahren können, und Fahrradfahrern, die lernen, durchgeführt wird, wobei die abrupte Neigung des Fahrrads einem Misserfolg entspricht und eine lange Dauer ohne abrupte Neigung einem Erfolg entspricht.

## Claims

1. Bike (10) comprising a frame (11) provided with a front wheel (12) oriented by a handlebar (13), a saddle (39), a crankset (14 and 15), said frame being connected to two rear pivoting uprights (18, 19), each bearing one rear wheel (22, 23), which leans over with the frame of the bike, the pivoting rear uprights being mounted by independent pivot links (40, 56, 57) on the frame, the crankset actuating two independent drive means (16, 17, 26, 27, 28, 29, 59, 60) of the rear wheels, **characterised in that** the drive means of each rear wheel comprises a freewheel (59, 60), the drive means being configured such that, in a bend, only the rear wheel located on the inside of the bend is driven by the crankset, the rear wheel located on the outside of the bend being in freewheel mode and not being driven by the crankset.

2. Bike (10) according to claim 1, which further comprises a means (43, 44, 45, 46, 47, 48, 49, 55, 58) for blocking the pivot links (40, 56, 57) of the pivoting rear uprights (18, 19).

3. Bike (10) according to claim 2, wherein the means (43, 44, 45, 46, 47, 48, 49, 55, 58) for blocking the pivot links (40, 56, 57) is configured to block the relative position of the pivoting rear uprights (18, 19).

4. Bike (10) according to one of claims 2 or 3, which further comprises a means for inhibiting the means (43, 44, 45, 46, 47, 48, 49, 55, 58) for blocking the pivot links (40, 56, 57) and a means for controlling the inhibition means according to the speed of the bike.

5. Bike (10) according to claim 4, wherein the means for controlling the inhibition means comprises an accelerometer.

6. Bike (10) according to one of claims 1 to 5, wherein the drive means (16, 17, 26, 27, 28, 29) of the rear wheels (22, 23) each comprise a chain (28, 29) mounted between one gear wheel (16, 17) of the crankset, and at least one sprocket (26, 27) attached to the corresponding rear wheel, each chain passing over the corresponding pivoting rear upright (18, 19), each pivoting rear upright supporting the shaft (24, 25) of the corresponding rear wheel between each said sprocket and said rear wheel.

7. Bike (10) according to one of claims 1 to 6, which comprises, between the frame (11) and the shaft (24, 25) of each rear wheel (22, 23), a rear damper (30, 31) resting on the shaft of the rear wheel at the same location as the pivoting rear upright (18, 19) carrying said rear wheel.

8. Bike (10) according to one of claims 1 to 7, which comprises a motor drive for the rear wheels (22, 23).

9. Bike (10) according to claim 8, wherein the motor drive comprises two motors, each incorporated in one of said rear wheels.

10. Bike (10) according to claim 9, which comprises a module for controlling the power applied by each of said motors to each of the rear wheels.

11. Bike (10) according to claim 10, wherein the front wheel comprises a motor that actuates it, the control module also controlling the power applied by the front wheel motor.

12. Bike (10) according to one of claims 10 or 11, which comprises a motor drive for orienting the handlebar, the control module also controlling the handlebar orientation motor.

13. Bike (10) according to one of claims 10 to 12, wherein the module for controlling the power applied by each of the motors is connected to a sensor of the angle of the frame relative to the vertical, a sensor of the speed of the bike, and a sensor of the angular position of the handlebar, the control module being configured such that the power applied by each motor incorporated in one of said wheels gives rise to a differential of the forces applied by the ground on the bike, this differential matching a moment of these forces relative to the centre of gravity of the bike and of the cyclist, based on the speed, the angular position of the handlebar and the inclination of the bike.

14. Bike (10) according to claim 13, wherein the control module utilises a function linking the values of speed, angular position of the handlebar and inclination of the bike to the controls of the motors, which function is determined by automatic learning.

15. Bike (10) according to claim 14, wherein the automatic learning is carried out by experienced cyclists and learner cyclists, with the sudden inclination of the bike corresponding to a failure and a long period of time without a sudden inclination corresponding to a success.
